(19) Europäisches Patentamt
European Patent Office
Office européen des brevets

(11) EP 1 658 345 B1

(12) # EUROPÄISCHE PATENTSCHRIFT

(45) Veröffentlichungstag und Bekanntmachung des Hinweises auf die Patenterteilung:
**16.10.2013 Patentblatt 2013/42**

(21) Anmeldenummer: **04764328.3**

(22) Anmeldetag: **20.08.2004**

(51) Int Cl.:
***C09J 7/00*** (2006.01) ***C09J 7/02*** (2006.01)

(86) Internationale Anmeldenummer:
**PCT/EP2004/009344**

(87) Internationale Veröffentlichungsnummer:
**WO 2005/021670 (10.03.2005 Gazette 2005/10)**

(54) **ZUMINDEST ZWEISCHICHTIGE KLEBSTOFFFOLIE**

ADHESIVE FILM COMPRISING AT LEAST TWO LAYERS

FILM ADHESIF A AU MOINS DEUX COUCHES

(84) Benannte Vertragsstaaten:
**DE ES FR GB IT**

(30) Priorität: **22.08.2003 DE 10339199**

(43) Veröffentlichungstag der Anmeldung:
**24.05.2006 Patentblatt 2006/21**

(73) Patentinhaber: **TESA SE**
**20253 Hamburg (DE)**

(72) Erfinder:
- **BARGMANN, Renke**
  **22527 Hamburg (DE)**
- **HUSEMANN, Marc**
  **D-22559 Hamburg (DE)**

(74) Vertreter: **Heins, Matthias**
**tesa AG**
**Quickbornstraße 24**
**20253 Hamburg (DE)**

(56) Entgegenhaltungen:
**EP-A- 1 323 800 US-B1- 6 210 522**
**US-B1- 6 565 969**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 658 345 B1

## Beschreibung

Die Erfindung betrifft eine zumindest zweischichtige Klebstofffolie, deren Verwendung zum Verkleben von elektrischen Modulen ("Chips") in Kartenkörpem und ein Verfahren zur Herstellung derartiger Klebstofffolien.

Zur Implantierung von elektrischen Modulen in Kartenkörpem sind im Stand der Technik bereits eine Vielzahl von Klebstofffolien oder Fügeverfahren bekannt. Ziel dieser Implantierungen ist die Herstellung von Telefonkarten, Kreditkarten, Parkautomatkarten, Versicherungskarten, etc. Beispiele für die entsprechenden Verklebungsverfahren finden sich z.B. in den Patentschriften US 6,210,522 B1, EP 0 842 995, EP 1 078 965 und DE 199 48 560.

In diesem Bereich der Verklebung steigen aber kontinuierlich die Anforderungen an das Klebesystem. So muss der Kleber eine gute Haftung auf Polycarbonat, auf ABS, PVC und PET aufweisen, aber ebenso eine gute Haftung zum elektrischen Modul. Hier wird in der Regel auf Epoxy-Materialien oder Polyimid verklebt. Früher wurden Cyan-Acrylate als Flüssigkleber eingesetzt, die den Vorteil aufwiesen, dass eine optimale Benetzung des Kartenkörpers sowie des elektrischen Chips erzielt wurde. Diese Technologie ist aber im Aussterben begriffen, da die Prozesse sehr langsam waren. Das Lösemittel verdampfte nur langsam aus der Cavität des Kartenkörpers, die Spritzen zur Dosierung verstopften beim Stillstand durch Austrocknen und waren zudem schlecht dosierbar und der Flüssigkleber benötigte ebenfalls eine gewisse Zeit zum Aushärten. Als Resultat war die Qualität der Verklebung recht schlecht.

Hier zeigen sich die Schmelzhaftkleber den Flüssigklebem deutlich überlegen. Dennoch ist die Auswahl an geeigneten Verbindungen auch hier sehr eingeschränkt, da sehr hohe Anforderungen an diese Fügetechnik gestellt werden. Eine Einschränkung sind die sehr unterschiedlichen Materialien, die verklebt werden müssen. Durch die sehr unterschiedlichen Polaritäten von PC (Polycarbonat), PVC (Polyvinylchlorid), PET (Polyethylenterephthalat), ABS (Acrylnitril- Butadien- Styrol- Copolymere), Epoxy- Materialien und Polyimiden ist es unmöglich, ein einzelnes Polymer zu finden, welches auf allen Materialien gleich gut haftet.

Weiterhin steigen die Anforderungen der Endkunden immer weiter an. So ist z.B. die Ebenheit des elektrischen Moduls mit dem Kartenkörper ein wichtiges Kriterium, da ansonsten die Karten nicht mehr ausgelesen werden könnten. Dies bedingt, dass die Implantiertemperaturen nach oben begrenzt sind, da ansonsten Verformungen auftreten.

Ein weiteres Kriterium ist die Anforderung aus dem Bankenbereich, dass die elektrischen Module sich nicht zerstörungsfrei entfernen lassen. Dementsprechend muss die innere Kohäsion des Klebers sehr hoch sein, so dass er nicht in der Mitte spaltet und die Haftung zu beiden Seiten (Kartenkörper und elektrisches Modul) extrem hoch ist. Gleichzeitig muss der Kleber auch eine sehr hohe Flexibilität aufweisen, da die Karten nach der Implantierung Torsionstests und Biegetest durchlaufen. Bevorzugt sollte erst das Kartenmaterial brechen, bevor die Haftung zum Kartenkörper und zum elektrischen Modul aussetzt. In der Regel werden noch nicht einmal Abhebungen am Rand geduldet. Ein weiteres Kriterium sind Temperaturschwankungen und der Einfluss von Feuchtigkeit, da diese Karten in der späteren Benutzung sowohl hohe als auch tiefe Temperaturen stand halten und zum Teil auch einmal einen Waschdurchgang überstehen müssen. Dementsprechend sollte der Kleber bei tiefen Temperaturen nicht verspröden, bei hohen Temperaturen nicht verflüssigen und eine geringe Tendenz zur Aufnahme von Wasser besitzen.

Ein weiteres Anforderungskriterium ist durch die wachsende Anzahl des Kartenbedarfs die Verarbeitungsgeschwindigkeit. Der Kleber sollte sehr schnell erweichen oder Aufschmelzen, damit der Implantierprozess innerhalb einer Sekunde abgeschlossen werden kann.

Der Erfindung liegt in Anbetracht dieses Standes der Technik die Aufgabe zu Grunde, eine verbesserte Klebstofffolie zum Implantieren von elektrischen Modulen in einen Kartenkörper zur Verfügung zu stellen, welche die oben genannten Kriterien erfüllt und insbesondere zu den unterschiedlichen Kartenkörpem und elektrischen Modulen eine sehr hohe Haftung erzielt.

Erfindungsgemäß wird die Aufgabe gelöst durch eine zweischichtige Klebstofffolie gemäß Anspruch 1. Die Klebstoffolie ist dabei mit zumindest zwei Klebstoffschichten (i) und (ii) ausgerüstet, die sich chemisch voneinander unterscheiden.

Die in der erfindungsgemäßen Klebstofffolie basiert Schicht (i) auf thermoplastischen Polymeren auf Basis von Polyestern, Polyamiden, Copolyestern und/oder Copolyamiden, und Schicht (ii) auf, hitzeaktivierbaren Systemen.

Bei der Verklebung von elektrischen Modulen in einen Kartenkörper weist die Schicht (ii) eine sehr gute Haftung zu den unterschiedlichen Kartenkörpern und die Schicht (i) eine sehr gute Haftung zum elektrischen Modul auf.

Zum Aufbau der erfindungsgemäßen Klebstofffolien vergleiche Fig. 1; es zeigen:

1 ein elektrisches Modul (Chip)
2 den Kartenkörper
3 die Klebeschicht (i)
4 die Klebeschicht (ii).

Die Klebeschichten (i) und (ii) können die gleichen Schichtdicken oder unterschiedliche Schichtdicken aufweisen. Der gesamte Klebeverbund besitzt in einer bevorzugten Auslegung eine Schichtdicke zwischen 10 und 125 µm.

In einer weiteren bevorzugten Auslegung weist die Klebeschicht (i) zwischen 5 und 90 µm auf, die Klebeschicht (ii) ebenfalls zwischen 5 und 90 µm.

Erfindungsgemäß befindet sich zwischen der Schicht (i) und der Schicht (ii) eine Primerschicht, wobei der Primer funktionelle Gruppen zur Vernetzung besitzt.

Vergleiche hierzu Fig.2, wobei die Bezeichnungen denen in Fig. 1 entsprechen Und

5 eine Primerschicht

darstellt.

Die Schichtdicke der Primerschicht liegt in einer bevorzugten Auslegung zwischen 0,5 und 100 µm. Die Klebschichten (i) und (ii) und die Primerschicht unterscheiden sich in Hinblick auf ihre chemische Zusammensetzung.

Klebeschicht (i)

Die Klebeschicht (i), ausgerichtet zur Verklebung des elektrischen Moduls, muss eine gute Haftung zu Epoxy-Materialien und Polyimiden aufweisen.

Erfindungsgemäß werden hierfür thermoplastische Materialien eingesetzt, die durch Ihr Aufschmelzen eine gute Benetzung der Epoxy- oder Polyimidoberfläche erreichen. Hier werden erfindungsgemäß folgende Polymere eingesetzt: Polyester, Polyamide, Copolyamide, Copolyester.

Die Schicht (i) umfasst somit Klebemassen, die unter Temperatureinwirkung und optionalen Druck haftklebrig werden und nach der Verklebung und Abkühlen durch die Verfestigung eine hohe Klebkraft auf Polyimid oder Epoxy-Materialien aufbauen. Die Klebkraft ist besonders bevorzugt so hoch, dass nach dem Implantierprozess das elektrische Modul nicht mehr zerstörungsfrei entfernt werden kann. Je nach Implantiertemperatur weisen diese hitzeaktivierbaren Klebemassen unterschiedliche statische Glasübergangstemperaturen $T_{G,A}$ oder einen Schmelzpunkte $T_{S,A}$ auf. In einem sehr bevorzugten Bereich liegt die $T_{G,A}$ oder $T_{S,A}$ in einem Bereich zwischen + 55°C und 150 °C.

Zur Optimierung der klebtechnischen Eigenschaften und des Aktivierungsbereiches lassen sich Klebkraftsteigernde Harze oder Reaktivharze hinzusetzten, bevorzugt ohne dass es zu einer Reaktion zwischen diesen Harzen und der Klebmasse kommt.

Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Thermoplasten kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Für die Verankerung der hitzeaktivierbaren Polymere von Schicht (i) kann es von Vorteil sein, wenn das Polymer vor der Beschichtung mit Corona oder Plasma behandelt wird. Für die atmosphärische Plasmabehandlung eignen sich z.B. Geräte der Fa. Plasmatreat.

**Klebeschicht (ii)**

Die Klebeschicht (ii) wird dermaßen gewählt, dass Sie sich von der Schicht (i) (i) durch ihre chemische Zusammensetzung unterscheidet. Die Klebeschicht (ii) besitzt eine sehr gute Haftung zu PC und/oder ABS und/oder PET und/oder PVC. In einer sehr bevorzugten Auslegung ist die Haftung zu diesen Materialien so hoch, dass sich das elektrische Modul nicht mehr zerstörungsfrei vom Kartenkörper entfernen lässt. Je nach Implantiertemperatur weisen die hitzeaktivierbaren Klebemassen für Klebeschicht (ii) unterschiedliche statische Glasübergangstemperaturen $T_{G,A}$ oder einen Schmelzpunkte $T_{S,A}$ auf. In einem sehr bevorzugten Bereich liegt die $T_{G,A}$ oder $T_{S,A}$ in einem Bereich zwischen + 55°C und 150°C.

Erfindungsgemäß werden hitzeaktivierbare Kleber eingesetzt, die insbesondere aus einem Elastomer und zumindestens einem Reaktivharz bestehen. Als Elastomere werden in diesem Fall bevorzugt Kautschuke, Polychlorisoprene, Polyacrylate, Nitrilkautschuke, epoxidierte Nitrilkautschuke, etc. eingesetzt. Als Reaktivharze eigenen sich z.B. Phenolharze, Epoxy Harze, Melaminharze, Harze mit Isocyanatfunktionen oder Mischungen aus den obengenannten Harzen. In Kombination mit den Reaktivsystemen lassen sich auch eine Vielzahl anderer Harze, Füllmaterialien, Katalysatoren, Alterungsschutzmittel etc. zusetzen.

Eine sehr bevorzugte Gruppe umfasst Epoxy-Harze. Das Molekulargewicht (Gewichtsmittel Mw) der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DEN™ 431, DENTM 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich als Reaktivharze auch Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

Um die Reaktion zwischen den beiden Komponenten zu beschleunigen, lassen sich auch Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products.

Weiterhin lassen sich auch Amine, insbesondere tert.-Amine zur Beschleunigung einsetzen.

In einer weiteren bevorzugten Auslegung werden Klebemassen auf Poly(meth)acrylatbasis eingesetzt. Sehr bevorzugt werden Polymere eingesetzt, die aus Polymeren aus zumindest den folgenden Monomeren bestehen

a3) 70 bis 100 Gew.- % Acrylsäureester und/ oder Methacrylsäureester und/ oder deren freien Säuren mit der folgenden Formel

$$CH_2 = CH (R_1) (COOR_2) .$$

wobei $R_1$ = H und/ oder $CH_3$ und $R_2$ = H und/ oder Alkylketten mit 1 bis 30 C- Atomen sind.

Weiterhin sind zur Herstellung der Polymere optional die folgenden Monomere zugesetzt:

a4) bis zu 30 Gew.-% olefinisch ungesättigte Monomere mit funktionellen Gruppen.

In einer sehr bevorzugten Auslegung werden für die Monomere a3) Acrylmomonere umfassend Acryl- und Methacrylsäureester mit Alkylgruppen bestehend aus 1 bis 14 C-Atomen eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propymethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z.B. 2-Ethylhexylacrylat. Weitere einzusetzende Verbindungsklassen, die ebenfalls in geringen Mengen unter a3) hinzugesetzt werden können, sind Cyclohexylmethacrylate, Isobornylacrylat und Isobornylmethacrylate.

In einer vorteilhaften Variante werden für a4) Acrylmonomere entsprechend der folgenden allgemeinen Formel eingesetzt,

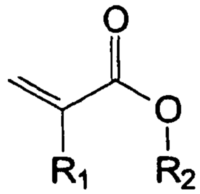

wobei $R_1$ = H und/oder $CH_3$ ist und der Rest **-OR₂** eine funktionelle Gruppe darstellt oder beinhaltet, welche eine nachfolgende UV-Vernetzung der Haftklebemasse unterstützt, welche z.B. in einer besonders bevorzugten Auslegung eine H-Donor Wirkung besitzt.

Besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t- Butylphenylacrylat, t- Butylaphenylmethacrylat, Phenoxyethylacrlylat, Phenoxyethylmethacrylat, 2- Butoxyethylmethacrylat, 2- Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6- Hydroxyhexylmethacrylat, N- tert.- Butylacrylamid, N- Methylolmethacrylamid, N- (Buthoxymethyl) methacrylamid, N- Methylolacrylamid, N- (Ethoxymethyl) acrylamid, N- Isopropylacrylamid, Vinylessigsäure, Tetrahydrofufurylacrlyat, β- Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a4) aromatische Vinylverbindungen eingesetzt, wobei die aromatischen Kerne bevorzugt aus $C_4$- bis $C_{18}$- Bausteinen bestehen und auch Heteroatome enthalten können. Besonders bevorzugte Beispiele sind Styrol, 4- Vinylpyridin, N- Vinylphthalimid, Methylstyrol, 3, 4- Dimethoxystyrol, 4- Vinylbenzoesäure, wobei diese Aufzählung nicht abschließend ist.

Zur Polymerisation werden die Monomere dermaßen gewählt, dass die resultierenden Polymere als hitzeaktivierbare Klebemassen eingesetzt werden können, insbesondere derart, dass die resultierenden Polymere klebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft oberhalb 30 °C.

Zur Erzielung einer Glasübergangstemperatur $T_{G,A}$ der Polymere von $T_{G,A} \geq 30$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer weiteren bevorzugten Ausführungsform des erfindungsgemäßen Haftklebebandes werden Polyolefine, insbesondere Poly- α- olefine, im Sinne der Schicht (ii) eingesetzt, die einen Erweichungsbereich von größer 30 °C und kleiner 150 °C aufweisen und sich ebenfalls nach der Verklebung während des Abkühlens wieder verfestigen. Die polyolefinaktivierbaren Haftklebemassen weisen in einer bevorzugten Ausführungsform statische Glasübergangstemperaturen $T_{G,A}$ oder Schmelzpunkte $T_{S,A}$ von +65 °C bis 140 °C auf. Die Klebkraft dieser Polymere kann durch gezielte Additivierung gesteigert werden. So lassen sich z.B. Polyimin- oder Polyvinylacetat- Copolymere als klebkraftfördernde Zusätze verwenden.

Zur Erzielung der gewünschten statischen Glasübergangstemperatur $T_{G,A}$ oder des Schmelzpunktes $T_{S,A}$ werden die eingesetzten Monomere sowie deren Mengen auch hier bevorzugt wieder derart gewählt, dass bei Anwendung der Fox-Gleichung (G1) die gewünschte Temperatur resultiert.

Neben der Monomer bzw. Comonomerzusammensetzung zur Steuerung der Glasübergangstemperatur kann das Molekulargewicht (Gewichtsmittel Mw) variiert werden. Um eine niedrige statische Glasübergangstemperatur $T_{G,A}$ oder Schmelzpunkt $T_{S,A}$ einzustellen, werden Polymere mit einem mittleren oder niedrigen Molekulargewicht (Gewichtsmittel Mw) eingesetzt. Auch können niedermolekulare und hochmolekulare Polymere miteinander gemischt werden. In besonders bevorzugten Auslegungen werden Polyethylene, Polypropene, Polybutene, Polyhexene oder Copolymerisate aus Polyethylen, Polypropen, Polybuten oder Polyhexen eingesetzt.

Von der Firma Degussa sind unter dem Handelsnamen Vestoplast™ unterschiedliche hitzeaktivierbare Poly-$\alpha$-olefine kommerziell erhältlich. Es werden Propen-reiche Typen unter den Bezeichnungen Vestoplast™ 703, 704, 708, 750, 751, 792, 828, 888 oder 891 angeboten. Diese besitzen Schmelzpunkte $T_{S,A}$ von 99 bis 162 °C. Weiterhin sind auch Buten-reiche Typen unter den Bezeichnungen Vestoplast™ 308, 408, 508, 520 und 608 kommerziell erhältlich. Diese besitzen Schmelzpunkte $T_{S,A}$ von 84 bis 157 °C.

Weitere Beispiele für hitzeaktivierbare Haftklebemassen werden in den Patenten US 3,326,741, US 3,639,500, US 4,404,246, US 4,452,955, US 4,404,345, US 4,545,843, US 4,880,683 und US 5,593,759 beschrieben. In diesen wird ebenfalls auf weitere Temperatur-aktivierbaren Haftklebemassen hingewiesen.

**Zwischenschicht (Primerschicht / Sperrschicht / Träger)**

Zusätzlich zu den Schichten (i) und (ii) ist eine Primerschicht vorgesehen.

Als Primer eignen alle dem Fachmann bekannten und kommerziell erhältlichen Primer, die funktionelle Gruppen zur Vernetzung besitzen. So werden in einer bevorzugten Auslegung Sarane, Aziridine oder Isocyanate auch in Kombination miteinander eingesetzt. Bevorzugt wird als Reaktiv-Primer ein bi- oder multifunktionelles Aziridin oder Isocyanat eingesetzt, wobei die Primer in einer Matrix eingerührt werden können.

Als polymere oder präpolymere Verbindungen, die als Primer geeignet sind, können weiterhin Verbindungen mit Carbonsäuregruppen eingesetzt werden. Geeignete Polymere sind z.B. Polyurethane, Polyurethan/Acrylat Copolymere, Copolymere oder Terpolymere von Polyalkylenen, Polyalkyldienen, Polyacrylatestern, Polyalkylestern, Polyvinylestern, Polyvinylen mit Acrylsäure oder Methacrylsäure.

Beispiele für Copolymere sind Polyethylen/acrylsäure-Copolymere, Polyethylen/ methacrylsäure-Copolymere, Polyethylen/methacrylsäure/acrylsäure-Terpolymere, Methylmethacrylate/Acrylsäure-Copolymere, Polybutadien/methacrylsäure-Copolymere, Vinylchloride/Acrylsäure-Copolymere, und Mischungen daraus. Die bevorzugten Polymere und Copolymere sind Polyurethane, Polyethylen/acrylsäure-Copolymere und Polyethylen/Methacrylsäure Copolymere. Die Eigenschaften können durch die Anzahl der Carbonsäuregruppen variiert werden.

Vernetzende Verbindungen für die entsprechenden Abmischungen besitzen bevorzugt multifunktionelle Gruppen. Multifunktionell bedeutet, dass die Verbindungen eine Funktionalität von größer oder gleich 2 besitzen.

Geeignete Vernetzer umfassen beispielsweise polyfunktionelle Aziridine, multifunktionelle Carbodiimide, multifunktionelle Epoxid- und Melamin- Harze. Die bevorzugten Vernetzer sind polyfunktionelle Aziridine, wie z.B. Trimethylpropane- tris- (B- (N- aziridinyl) propionat, Pentaerythritol- tris- (B- (aziridinyl) propionat, and 2- Methyl- 2- ethyl- 2- ((3- (2- methyl- 1- aziridinyl)- 1- oxopropoxy) methyl)- 1, 3- propandiylester.

Alternativ können auch Primer mit Hydroxygruppen oder Amingruppen eingesetzt werden.

Weiterhin können zur Verfestigung auch Bindemittel eingesetzt werden. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol- Butadien- Systeme, PVC u. ä. sowie deren Copolymere. Im Normalfall handelt es dabei um anionische oder nicht- ionogen stabilisierte Dispersionen, in besonderen Fällen können aber auch kationische Dispersionen von Vorteil sein.

**Verfahren zur Herstellung**

Die mehrschichtige hitzeaktivierbare Klebemasse kann nach verschiedenen Verfahren hergestellt werden. In einem weiteren sehr bevorzugten Verfahren werden die Schichten (i), (ii) und die Primerschicht(en) im Coextrusionsverfahren gleichzeitig mit einer Coextrusionsdüse zusammengeführt.

In einem weiteren Verfahren werden die Klebemasse (i), (ii) und die Primerschicht(en) In einem weiteren Verfahren werden die Klebemasse (i), (ii) und die Primerschicht(en) getrennt aufgetragen. In einem ersten Schritt wird die Klebemasse (i) auf ein Trennpapier oder einen Trennliner oder einem Prozessliner beschichtet. Die Beschichtung kann aus Lösung oder aus der Schmelze erfolgen. Bei der Beschichtung aus Lösung wird - wie bei der Verarbeitung von Klebemassen aus Lösung üblich - bevorzugt mit der Rakeltechnik gearbeitet, wobei hier alle dem Fachmann bekannten Rakeltechniken eingesetzt werden dürfen. Für den bevorzugten Auftrag aus der Schmelze wird - falls das Polymer in Lösung vorliegt - das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.

Für den erfindungsgemäßen mehrschichtigen Aufbau mit Primerschicht(en) wird/werden im zweiten Schritt die Primerschicht(en) auf die Klebeschicht (i) aus Lösung oder aus der Schmelze beschichtet. Optional wird im zweiten

Schritt auch auf die Klebeschicht (ii) aus Lösung oder aus der Schmelze beschichtet und dann zur Klebeschicht (i) zukaschiert.

Für die Beschichtung aus Lösung werden bevorzugt Lösemittel eingesetzt, die die Schicht (i) nicht auflösen oder aktivieren. Es wird - wie bei der Verarbeitung von Klebemassen aus Lösung üblich - bevorzugt mit der Rakeltechnik gearbeitet, wobei hier alle dem Fachmann bekannten Rakeltechniken eingesetzt werden dürfen. Für den Auftrag aus der Schmelze wird - falls das Polymer in Lösung vorliegt - das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.

In einem dritten Verfahren werden die einzelnen Schichten getrennt beschichtet und anschließend zusammenkaschiert. Die getrennte Beschichtung von der Klebemassen (i) und (ii) und der Primerschicht(en) kann aus Lösung oder auch aus der Schmelze geschehen und nach den bereits zuvor beschriebenen Verfahren erfolgen. Anschließend werden die Schichten zusammenkaschiert. Hierfür wird sehr bevorzugt ein beheizbares Walzensystem eingesetzt. Durch den Eintrag von Wärme werden die Klebeschichten (i) und (ii) und die Primerschicht(en) klebrig und die Verankerung wird deutlich verbessert.

Generell können zur Verbessung der Verankerung eine, zwei oder alle Schichten mit Corona und/oder Plasma und/oder Flamme vorbehandelt sein. Auch können alle anderen Methoden zur Erhöhung der Oberflächenspannung eingesetzt werden, wie z.B. Behandlung mit Chrom-Schwefel-Säure oder Trichloressigsäure bzw. Trifluoressigsäure.

Nach der Beschichtung der Klebemassen zu den Schichten (i) und/oder (ii) und/oder der/den Primerschichten kann es erforderlich sein, die Schichten zu vernetzen.

Zur optionalen Vernetzung mit UV- Licht werden den Klebemassen für die Schichten (i) und/ oder (ii) und/ oder der/den Primerschicht (en) UV- absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2, 2- Diethoxyacetophenon (erhältlich als Irgacure 651® von Fa. Ciba Geigy), 2, 2- Dimethoxy- 2-phenyl- 1- phenylethanon, Dimethoxyhydroxyacetophenon, substituierte $\alpha$- Ketole, wie z. B. 2- Methoxy- 2- hydroxypropiophenon, aromatische Sulfonylchloride, wie z. B. 2- Naphthyl sulfonylchlorid, und photoaktive Oxime, wie z. B. 1-Phenyl- 1, 2- propandion- 2- (O- ethoxycarbonyl) oxim.

Die oben erwähnten und weitere einsetzbare Photoinititatioren und andere vom Typ Norrish **I** oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die Schichten mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

In einer weiteren Ausführungsform ist es vorteilhaft, die Schichten thermisch zu vernetzen.

Als Trägermaterialien für die mehrschichtigen Klebemassen werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. Die Trägermaterialien sollten mit einer Trennschicht ausgerüstet sein. Die Trennschicht besteht in einer sehr bevorzugten Auslegung der Erfindung aus einem Silikontrennlack oder einem fluorierten Trennlack.

Ebenfalls Inhalt der Erfindung ist die Verwendung der erfinderischen mehrschichtigen Klebstofffolie zur Verklebung von Chipmodulen in Kartenkörpern, wobei als Kartenkörper insbesondere PVC, ABS, PET, PC, PE, PP und dergleichen eingesetzt werden.

Weiterhin ist Teil der vorliegenden Erfindung eine Verklebungseinheit bestehend aus einem Kartenkörper, einer zumindest zweischichtigen Klebstoffolie, wie sie vorstehend beschrieben wurde, und einem Chipmodul.

**Beispiele**

**Testmethoden:**

***Iso-Bending A)***

Der Iso-Bending Test wird analog Iso/IEC 10373: 1993 (E) Section 6.1 durchgeführt. Der Test gilt als bestanden, wenn insgesamt mehr als 4000 Biegungen erreicht werden.

***Extrem-Biegetest B)***

Im Extrembiegetest wird ein 3 cm breiter Ausschnitt mit dem elektrischen Modul in der Mitte liegend aus der Chipkarte ausgeschnitten und dann 10 x von 3 cm Breite auf 2.5 cm Breite zusammengedrückt. Der Test gilt als bestanden, wenn das elektrische Modul sich nicht herauslöst.

***Handtest C)***

Im Handtest wird die Chipkarte mit der Hand über eine der belden Ecken, die näher zum elektrischen Modul liegen, so weit gebogen, bis dass die Karte bricht oder das Modul bricht. Dann gilt der Test als bestanden. Falls das elektrische Modul sich löst oder herrausspringt, gilt der Test als nicht bestanden.
Alle Handelsnamen beschreiben die Produkte, wie sie am Prioritätstag käuflich zu erwerben waren.

Beispiel 1) (nicht erfindüngsgemäß)

Tesa HAF 8405® (30 μm Klebmassenschichtdicke, basierend auf einem Nitrilkautschuk und einem Phenolharz, = Klebeschicht **(ii))** wird mit einem SIG Einschneckenextruder und einer Breyer Extrusionsdüse (300 μm Schlitz) mit 170°C mit einem tesa HAF 8440 (Klebeschicht 45 μm basierend auf Copolyamid) beschichtet. Der Verbund wird vor dem Aufwickeln über eine Kühlwalze geführt.

Beispiel 2) (nicht erfindungsgemäß)

Tesa HAF 8405® (30 μm Klebmassenschichtdicke, basierend auf einem Nitrilkautschuk und einem Phenolharz, = Klebeschicht (ii)) wird mit einem SIG Einschneckenextruder und einer Breyer Extrusionsdüse (300 μm Schlitz) mit 170°C mit einem Copolyester (Grilltex™ 1616, Fa. EMS-Grilltex, =Klebeschicht i)) beschichtet. Die Schichtdicke des Copolyester beträgt anschließend 50 μm. Der Verbund wird vor dem Aufwickeln über eine Kühlwalze geführt.

Beispiel 3) (nicht erfindungsgemäß)

Das Polyurethan (Pearlthane™ D 12F75, Fa. Danquinsa, = Klebebschicht (ii)) wird mittels eines SIG Einschneckenextruder und einer Breyer Extrusionsdüse (300 μm Schlitz) auf 170°C erwärmt und unter Druck auf ein mit ca. 1.5 g/m$^2$ Polydimethylsiloxan beschichtetes Trennpapier beschichtet. Die Schichtdicke der Klebeschicht (ii) betrug nach der Beschichtung 40 μm. Anschließend wird in einem zweiten Schritt mit einem tesa HAF 8440 (Klebeschicht 45 μm basierend auf Copolyamid, = Klebeschicht (i)) auf die Schicht (ii) beschichtet. Der Verbund wird vor dem Aufwickeln über eine Kühlwalze geführt.

**Implantierung der elektrischen Module**

Die Implantierung der elektrischen Module in den Kartenkörper erfolgte mit einem Implanter der Fa. Ruhlamat Testplatz Modul einsetzen.
Es wurden folgende Materialien eingesetzt.

Elektrische Module: Nedcard Dummy, Tape-Type: 0232-10
PVC-Karten: Fa. CCD
ABS-Karte: Fa. ORGA

In einem ersten Schritt werden über eine Zweiwalzenkaschieranlage der Fa. Storck GmbH die Beispiele 1 bis 3 mit 2 bar auf den Modulgurt der Fa. Nedcard kaschiert. Hierbei ist zu beachten, dass die Klebeschicht (i) direkt auf den Modulgurt beschichtet wird. Dann werden die elektrischen Module in die passende Kavität des Kartenkörpers

implantiert.

Es wurden folgende Parameter für alle Beispiele angewendet:

Heizschritte: 2
Stempeltemperatur: 190°C
Zeit: 2 x 1 s
Kühlschritt: 1x 800 ms, 25°C
Druck: 70 N pro Modul

**Ergebnisse**:

Die mit den erfinderischen Klebemassen hergestellten Chipkarten wurden nach den Testmethoden A, B und C ausgetestet. Die Ergebnisse sind in der Tabelle 1 dargestellt.

| Beispiele | Testmethode A | Testmethode B | Testmethode C |
|---|---|---|---|
| 1* | bestanden | bestanden | bestanden |
| 2* | bestanden | bestanden | bestanden |
| 3* | bestanden | bestanden | bestanden |
| * nicht erfindungsgemäß | | | |

Tabelle 1 kann entnommen werden, dass alle Beispiele dle wichtigsten Kriterien für eine Chipkarte bestanden haben und somit sehr gut zur Verklebung von elektrischen Modulen auf Kartenkörpem geeignet sind.

## Patentansprüche

1. Klebstofffolie, ausgerüstet mit zumindest zwei Klebstoffschichten (i) und (ii), wobei sich die zumindest zwei Schichten (i) und (ii) der Klebstofffolie chemisch voneinander unterscheiden, wobei
Schicht (i) auf thermoplastischen Polymeren basiert, nämlich auf Basis von Polyestern, Polyamiden, Copolyestern und/oder Copolyamiden, und
Schicht (ii) auf hitzeaktivierbaren Systemen basiert,
**dadurch gekennzeichnet, dass**
sich zwischen der Schicht (i) und der Schicht (ii) eine Primerschicht, befindet, und der Primer funktionelle Gruppen zur Vernetzung besitzt.

2. Klebstofffolie nach Anspruch 1, **dadurch gekennzeichnet, dass**
die hitzeaktivierbaren Systeme solche aus einem Elastomer und mindestens einem Reaktivharz sind, wobei insbesondere Kautschuke, Polychlorisoprene, Polyacrylate, Nitrilkautschuke und/oder epoxidierte Nitrilkautschuke als Elastomer und/oder Phenolharze, Epoxyharze, Melaminharze und/oder Harze mit Isocyanatfunktion allein oder in Kombination miteinander als Reaktivharze eingesetzt werden.

3. Klebstofffolie nach einem der Ansprüche 1 oder 2, **gekennzeichnet durch** eine Dicke zwischen 10 und 125 μm, insbesondere zwischen 30 und 90 μm.

4. Klebstofffolie nach einem der vorangehenden Ansprüche, **dadurch gekennzeichnet, dass**
die funktionellen Gruppen des Primers zur Vernetzung Aziridine, multifunktionelle Epoxide, multifunktionelle Hydroxygruppen, multifunktionelle Amine, multifunktionlellle Carbodiimide, multifunktionelle Isocyanate, multifunktionelle Carbonsäuren, multifunktionelle Carbonsäureanhydride, Polyimidoamine und/oder multifunktionelle Amide sind.

5. Verfahren zur Herstellung einer Klebstofffolie nach zumindest einem der vorangegangenen Ansprüche, **dadurch gekennzeichnet, dass**
die Klebstoffschichten (i) und/oder (ii) aus der Schmelze beschichtet werden.

## Claims

1. Adhesive film provided with at least two adhesive layers (i) and (ii), the at least two layers (i) and (ii) of the adhesive film differing chemically from one another, wherein
layer (i) is based on thermoplastic polymers, namely based on polyesters, polyamides, copolyesters and/or copolyamides, and
layer (ii) is based on heat-activatable systems,
**characterized in that** between layer (i) and layer (ii) there is a primer layer, and the primer possesses functional groups for crosslinking.

2. Adhesive film according to Claim 1, **characterized in that** the heat-activatable systems are those composed of an elastomer and at least one reactive resin, in which context, in particular, rubbers, polychloroisoprenes, polyacrylates, nitrile rubbers and/or epoxidized nitrile rubbers are used as elastomer and/or phenolic resins, epoxy resins, melamine resins and/or resins with isocyanate function, alone or in combination with one another, are used as reactive resins.

3. Adhesive film according to one of Claims 1 and 2, **characterized by** a thickness of between 10 and 125 μm, in particular between 30 and 90 μm.

4. Adhesive film according to one of the preceding Claims, **characterized in that** the functional groups of the primer for crosslinking are aziridines, polyfunctional epoxides, polyfunctional hydroxyl groups, polyfunctional amines, polyfunctional carbodiimides, polyfunctional isocyanates, polyfunctional carboxylic acids, polyfunctional carboxylic anhydrides, polyimidoamines and/or polyfunctional amides.

5. Process for producing an adhesive film according to at least one of the preceding claims, **characterized in that** adhesive layers (i) and/or (ii) are coated from the melt.

## Revendications

1. Feuille adhésive, pourvue d'au moins deux couches adhésives (i) et (ii), lesdites au moins deux couches (i) et (ii) de la feuille adhésive se distinguant chimiquement l'une de l'autre,
la couche (i) étant à base de polymères thermoplastiques, à savoir à base de polyesters, de polyamides, de copolyesters et/ou de copolyamides, et
la couche (ii) étant à base de systèmes thermoactivables,
**caractérisée en ce qu'**il existe, entre la couche (i) et la couche (ii), une couche d'apprêt et l'apprêt présente des groupes fonctionnels pour la réticulation.

2. Feuille adhésive selon la revendication 1, **caractérisée en ce que** les systèmes thermoactivables sont ceux à base d'un élastomère et d'au moins une résine réactive, où on utilise en particulier les caoutchoucs, les polychloroisoprènes, les polyacrylates, les caoutchoucs de nitrile et/ou les caoutchoucs de nitrile époxydés comme élastomère et/ou les résines phénoliques, les résines époxy, les résines de mélamine et/ou les résines présentant une fonction isocyanate comme résines réactives, seules ou en combinaison les unes avec les autres.

3. Feuille adhésive selon l'une quelconque des revendications 1 ou 2, **caractérisée par** une épaisseur entre 10 et 125 μm, en particulier entre 30 et 90 μm.

4. Feuille adhésive selon l'une quelconque des revendications précédentes, **caractérisée en ce que** les groupes fonctionnels de l'apprêt pour la réticulation sont les aziridines, les époxydes polyfonctionnels, les groupes hydroxy polyfonctionnels, les amines polyfonctionnelles, les carbodiimides polyfonctionnels, les isocyanates polyfonctionnels, les acides carboxyliques polyfonctionnels, les anhydrides d'acide carboxylique polyfonctionnels, les polyimidoamines et/ou les amides polyfonctionnels.

5. Procédé pour la préparation d'une feuille adhésive selon au moins l'une quelconque des revendications précédentes, **caractérisé en ce que** les couches adhésives (i) et/ou (ii) sont revêtues à partir de la masse fondue.

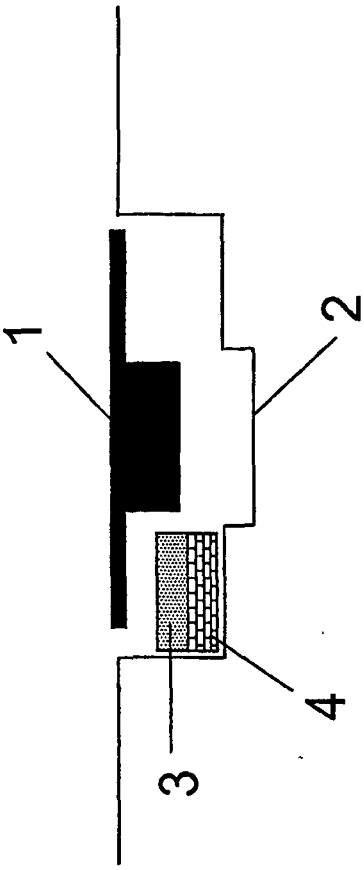


Fig. 1

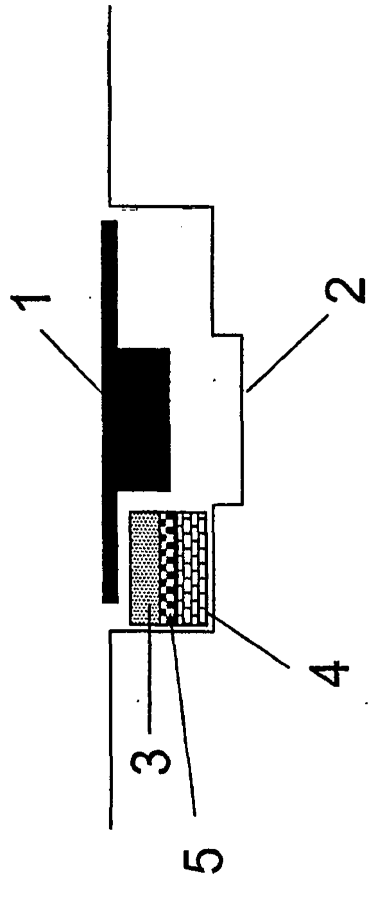


Fig 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6210522 B1
- EP 0842995 A
- EP 1078965 A
- DE 19948560
- US 3326741 A
- US 3639500 A
- US 4404246 A
- US 4452955 A
- US 4404345 A
- US 4545843 A
- US 4880683 A
- US 5593759 A


### In der Beschreibung aufgeführte Nicht-Patentliteratur


- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- Photoinitiation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- **SKELHORNE.** Electron Beam Processing, in Chemistry and Technology of UV and EB formulation for Coatings, Inks and Paints. SITA, 1991, vol. 1